# EUROPEAN PATENT SPECIFICATION

(11) **EP 0 961 915 B1**
(45) Date of publication and mention of the grant of the patent: **16.02.2005**
(21) Application number: 98900571.5
(22) Date of filing: 09.01.1998
(51) Int. Cl.: G01B 11/06

(54) **THICKNESS MEASURING APPARATUS**
DICKENMESSAPPARAT
DISPOSITIF POUR MESURER L'EPAISSEUR

(30) Priority: 21.01.1997 GB 9701177; 24.02.1997 GB 9703761
(43) Date of publication of application: 08.12.1999
(73) Proprietor: Hamilton, Neil Colin, Crowborough, Sussex TN6 3SP (GB)
(72) Inventor: Hamilton, Neil Colin, Crowborough, Sussex TN6 3SP (GB)
(74) Representative: Fry, Alan Valentine
(86) International application number: PCT/GB1998/000075
(87) International publication number: WO 1998/031984

(56) References cited:
- EP-A- 0 248 552
- US-A- 1 503 543
- US-A- 1 671 709
- US-A- 3 257 895
- US-A- 3 807 870
- US-A- 5 054 927

## Description

### FIELD OF THE INVENTION

This invention relates to a thickness measuring apparatus, most particularly for measuring the thickness of a double glazing unit but additionally useful for measuring the thickness of any sheet of transparent material.

### BACKGROUND OF THE INVENTION

A double glazing unit comprises first and second, substantially parallel, sheets of transparent material set in a frame so that there is an enclosed space between them. Once such a unit, or even a single sheet of glass, is mounted in a window opening, it is difficult to measure its thickness.

GB-A-1329240 describes apparatus for measuring the thickness of a sheet of glass but uses a complicated formula for calculation and would not be suitable for measuring the gap between two sheets of a double glazed unit.

GB-A-1581948 also discloses apparatus for measuring the thickness of a sheet of glass but requires a microscope to be focused on different surfaces and the movement of the microscope to be measured.

US-A-5054927 discloses apparatus for determining the thickness of insulated glass sheet in which a light source projects a light beam through the glass sheet and the size of the beam spot on a target indicates the sheet inch thickness.

US-A-1503543 discloses a glass thickness gauge in which light from a battery powered lamp is directed through a sheet of glass and reflected onto a graduated scale.

An object of the present invention is to provide a device which will easily measure the thickness both of the sheets of material and of the space between them in a double glazing unit.

### SUMMARY OF THE INVENTION

Such a thickness measuring apparatus is defined in claim 1.

Advantageous embodiments are defined in the dependent claims.

The positions of the images may be read by an electronic light sensor and converted to a digital display provided for example by an LED (light emitting diode) read out.

Preferably the laser beam is angled at 45 ° to the first planar surface so that the spacings of the reflected images on the gauge are twice the thickness measured.

The zero calibration of the gauge will be in the same vertical plane as the intersection of the light beam with the first surface.

In one form the mounting means and gauge are relatively slidable and, in use, the front surface of the base of the mounting is placed against the rear edge of the gauge and can be slid along it until the reflected images coincide with either a rule on the gauge or pre-marked indications of the spacings of conventional double glazed units.

Alternatively the mounting means may be integral with the gauge.

### BRIEF DESCRIPTION OF THE DRAWINGS

Embodiments of thickness measuring apparatus, in accordance with the invention as claimed will now be described, by way of example only, with reference to the accompanying drawings which show diagrammatically the following:
Figure 1 shows a perspective view of measuring apparatus located on a double glazed unit to be measured,
Figure 2 shows a side view of the measuring apparatus on a sheet of glass to be measured,
Figure 3 shows a plan view of the apparatus including one form of calibration, and
Figure 4 shows diagrammatically the light paths in a double glazing unit and gauge.

### DETAILED DESCRIPTION OF EMBODIMENTS OF THE INVENTION

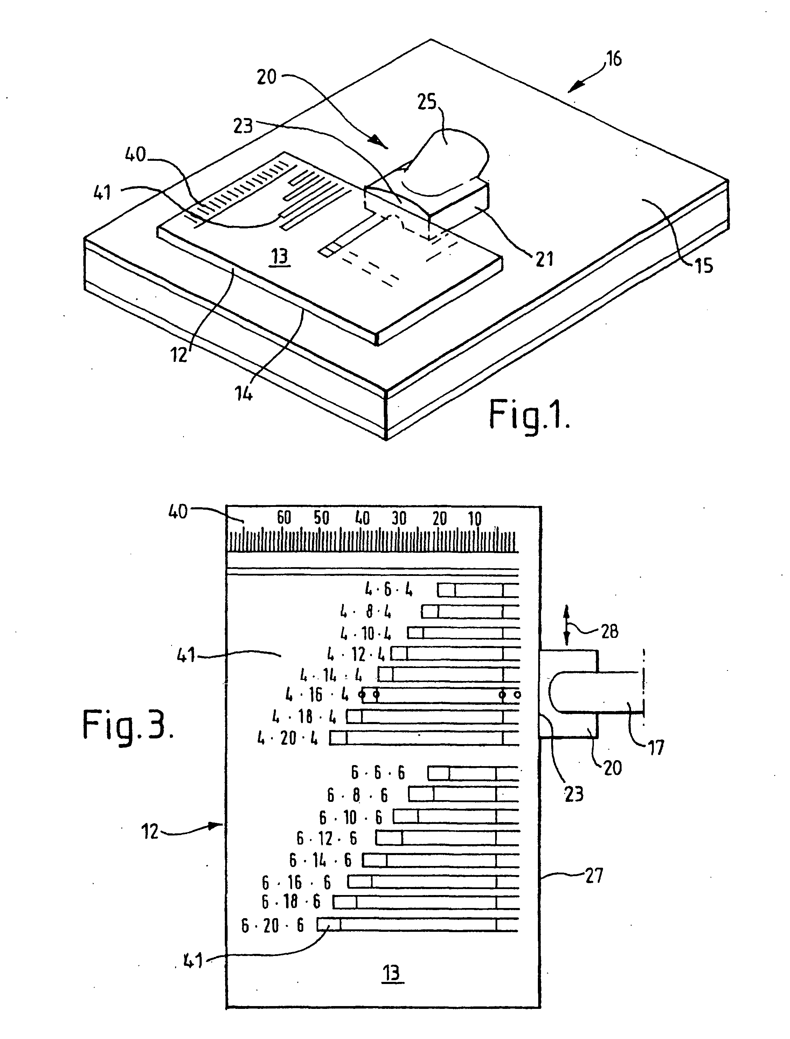

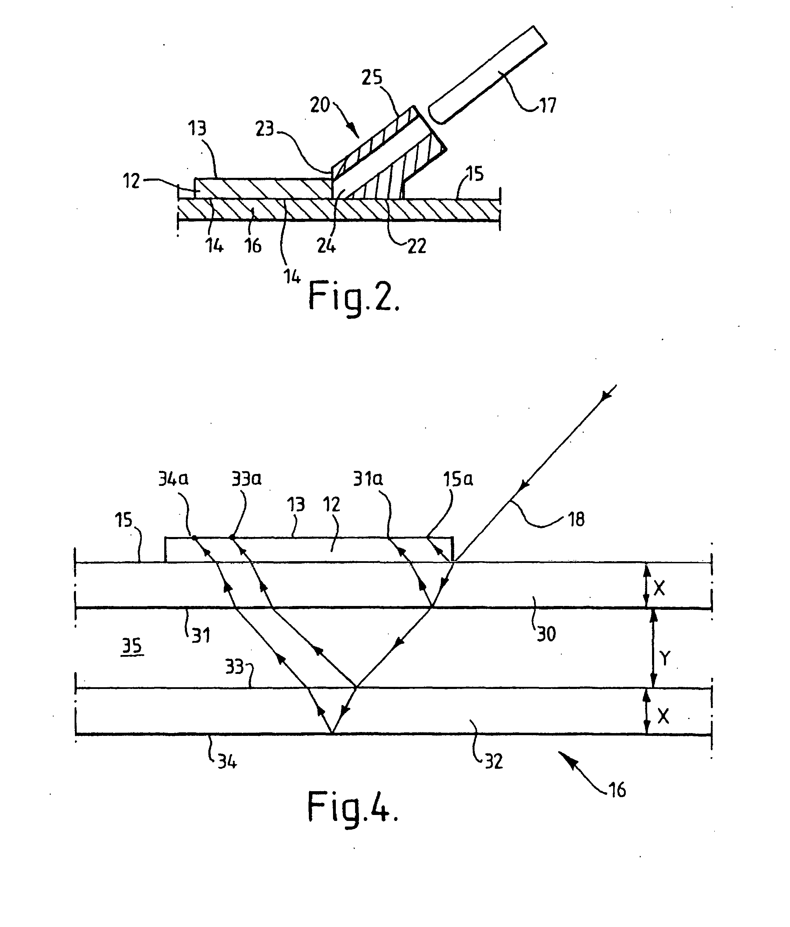

Referring to Figures 1 to 4 a gauge 12, in the form of a rectangular sheet of transparent material, for example perspex, has its planar upper surface 13 etched to provide a calibration indicated at 40, 41 and etched or coated to absorb and show up an image of laser light. The gauge has a planar lower surface 14 intended to be held flat on a planar surface 15 of a unit 16 to be measured. As seen in Figures 1 and 4 this unit is a double glazing unit.

A laser source 17, such as a laser torch for emitting a spot or line beam of focused light 18, is intended to be mounted in a laser mounting device 20. The mounting device comprises a base 21 having a planar lower surface 22 and a planar front surface 23 meeting at a right angled front lower edge 24. The base 21 is integral with a holder 25 defining a tubular passageway 26 for receiving the laser source. In this example the passageway is angled at 45° to the lower surface 22 and has an axis which intercepts the lower edge 24. In use the mounting unit is held flat against the surface 15 with its front surface 23 abutting the rear surface 27 of the gauge and it can then be slid along the rear edge 27, in directions normal to the plane containing the beam, as indicated by arrow 28.

The double glazing unit comprises a first sheet of transparent material 30 having an outer surface 15 and an inner surface 31, and a second substantially parallel sheet of transparent material 32 having an inner surface 33 and an outer surface 34, the inner surfaces being spaced from one another by a space 35. Each of the sheets 30, 32 of transparent material has a thickness X and the width of the space is indicated as Y.

As seen in Figure 4 the beam 18 from the laser passes through each of the surfaces 15, 31, 33 and 34 and is also reflected at each surface. The reflections from each surface pass through the material of the gauge and form a spot or line image on the upper surface of the gauge these images being indicated at respectively 1 5a, 31a, 33a and 34a. As seen in Figure 3 the upper surface 13 of the gauge is marked with calibrations in the form of a rule 40 and patterns of different spacings 41 commonly found in double glazing units. The laser unit can be slid along the gauge in the directions of arrow 28 until the four images align with four of the lines on the calibrations 41. Alternatively the laser can be aligned with the rule 40 and the distances read off the rule. With the light angled at 45° the actual spacings between images will be twice the measured thicknesses and the gauge is calibrated accordingly. The gauge can of course be differently calibrated if the light source is angled at a different angle to the surface 15.

By positioning the measuring device at different positions on the surface of a double glazing unit, the consistency of the air gap can be checked. The device can equally be used to measure thickness of a triple glazing unit.

## Claims

1. Thickness measuring apparatus comprising a gauge (12) which includes a sheet of clear transparent material having a planar lower surface (14) to be placed on a first planar surface (15) of a unit (16) to be measured and an upper surface (13) which is calibrated, a focused light source (17), mounting means for mounting the light source (17) at a fixed angle to the planar lower surface (14) of the gauge (12) so that the source will transmit a focused beam (18) onto said first planar surface (15) of the unit to be measured and images of the source reflected by other substantially parallel surfaces of the unit (16) will be formed on or in the gauge (12) whereby the focused light source (17) is a laser source mounted in a mounting device (20) to transmit a laser beam (18) onto said first planar surface (15) to be measured, the upper surface of said sheet being etched or coated to absorb the reflected light so that an image will be seen thereon, the gauge being calibrated (40) so that in use the or each reflected image formed on or in the gauge will be arranged to indicate the distance between the first planar surface (15) of the unit to be measured and said other surface(s) (31, 33, 34) of the unit from which the laser beam (18) has been reflected, and/or to indicate the distance between surfaces from which the laser beam (18) has been reflected.

2. Apparatus according to Claim 1 in which the laser light beam is in the form of a line.

3. Apparatus according to Claim 1 or Claim 2 including light sensor means arranged to sense images on or in the gauge and provide an electronic digital display of the thicknesses being measured.

4. Apparatus according to any of Claims 1 to 3 in which the fixed angle is substantial 45°.

5. Apparatus according to any of Claims 1 to 4 in which the gauge and light source are relatively movable to one another to bring different scales on the gauge into line with reflected images of light from the light source.

## Patentansprüche

1. Dickenmessgerät mit einer Messlehre (12), die aus einer Platte aus klar durchsichtigem Material besteht, die eine ebene untere auf einer ersten ebenen Oberfläche (15) einer zu messenden Einheit (16) aufzusetzende Oberfläche (14) und eine obere kalibrierte Oberfläche (13) aufweist mit einer fokussierenden Lichtquelle (17) und mit einem Lager zur Halterung der Lichtquelle (17) unter einem festen Winkel gegenüber der ebenen unteren Oberfläche (14) der Messlehre (12) derart, dass die Lichtquelle einen fokussierten Lichtstrahl (18) auf die erste ebene Oberfläche (15) der zu messenden Einheit schickt und Bilder der Lichtquelle, die durch die andere im Wesentlichen parallele Oberfläche der Einheit (16) reflektiert sind, auf oder in der Messlehre (12) abbildet, wobei die fokussierende Lichtquelle (17) eine Laserquelle ist, die in einer Lageranordnung (20) montiert ist, um einen Laserstrahl (18) auf die erste ebene zu messende Oberfläche (15) zu richten und wobei die obere Oberfläche geätzt oder überzogen ist, um das reflektierte Licht derart zu absorbieren, dass ein Bild darauf erkennbar wird und wobei die Messlehre derart kalibriert (40) ist, dass im Betrieb das oder jedes reflektierte Bild, das auf der Messlehre oder in dieser Messlehre erzeugt wird, den Abstand zwischen der ersten ebenen Oberfläche (15) der zu messenden Einheit und der anderen Oberfläche(n) (31, 33, 34) der Einheit anzeigt, von der der Laserstrahl (18) reflektiert wurde und/oder um den Abstand zwischen Oberflächen anzuzeigen, von denen der Laserstrahl (18) reflektiert wurde.

2. Gerät nach Anspruch 1, bei welchem der Laserlichtstrahl die Form einer Linie hat.

3. Gerät nach Anspruch 1 oder 2, weiches einen Lichtsensor aufweist, der so angeordnet ist, dass er die Bilder auf oder in der Messlehre feststellt und eine elektronische digitale Anzeige der gemessenen Dicke liefert.

4. Gerät nach einem der Ansprüche 1 bis 3, bei welchem der feste Winkel im Wesentlichen 45° beträgt.

5. Gerät nach einem der Ansprüche 1 bis 4, bei welchem die Messlehre und die Lichtquelle relativ zueinander beweglich sind, um unterschiedliche Skalen auf der Messlehre auf die reflektierten Bilder des Lichtes von der Lichtquelle auszurichten.

## Revendications

1. Dispositif de mesure d'épaisseur comprenant un gabarit (12) qui comporte une feuille d'un matériau clair transparent ayant une surface planaire inférieure (14) à placer sur une première surface planaire (15) d'une unité (16) à mesurer et une surface supérieure (13) qui est graduée, une source lumineuse focalisée (17), des moyens de montage pour monter la source lumineuse (17) selon un angle fixe par rapport à la surface planaire inférieure (14) du gabarit (12) de sorte que la source émettra un faisceau focalisé (18) sur ladite première surface planaire (15) de l'unité à mesurer et que des images de la source réfléchie par d'autres surfaces sensiblement parallèles de l'unité (16) se formeront sur ou dans le gabarit (12), la source lumineuse focalisée (17) étant une source laser montée dans un dispositif de montage (20) pour transmettre un faisceau laser (18) sur ladite première surface planaire (15) à mesurer, la surface supérieure de ladite feuille étant attaquée par gravure chimique ou revêtue de sorte à absorber la lumière réfléchie de manière qu'une image sera visible sur elle, le gabarit étant gradué (40) de sorte que, lors de l'utilisation, l'image ou chaque image réfléchie formée sur ou dans le gabarit sera disposée pour indiquer la distance entre la première surface planaire (15) de l'unité à mesurer et lesdites autres surfaces (31, 33, 34) de l'unité sur laquelle le faisceau laser (18) a été réfléchi, et/ou pour indiquer la distance entre les surfaces sur lesquelles le faisceau laser (18) a été réfléchi.

2. Dispositif selon la revendication 1, dans lequel le faisceau lumineux laser a la forme d'une ligne.

3. Dispositif selon la revendication 1 ou la revendication 2, comprenant des moyens pour capter la lumière disposés pour détecter des images dans ou sur le gabarit et pour fournir un affichage électronique digital des épaisseurs mesurées.

4. Dispositif selon l'une des revendications 1 à 3, dans lequel l'angle fixe est sensiblement de 45°.

5. Dispositif selon l'une des revendications 1 à 4, dans lequel le gabarit et la source lumineuse sont mobiles l'un par rapport à l'autre pour aligner différentes échelles sur des images réfléchie de la lumière émise par la source lumineuse.
